# EUROPÄISCHE PATENTANMELDUNG

(11) **EP 4 054 059 A1**
(43) Veröffentlichungstag der Anmeldung: **07.09.2022**
(21) Anmeldenummer: 21161056.3
(22) Anmeldetag: 05.03.2021
(51) Int. Cl.: H02K 1/02, H02K 15/02

(54) **MAGNETBLECH FÜR EIN BLECHPAKET, BLECHPAKET, ELEKTRISCHE MASCHINE UND VERFAHREN ZUR HERSTELLUNG EINES MAGNETBLECHS**

(71) Anmelder: Siemens Aktiengesellschaft, 80333 München (DE)
(72) Erfinder: Schuh, Carsten, 85598 Baldham (DE)

(57) **Zusammenfassung**

Die Erfindung betrifft ein Magnetblech für ein Magnetblechstapel einer elektrischen Maschine (6), wobei das Magnetblech (2) ein Kernmaterial (8) umfasst, das mindestens 97,5 Gew. % Eisen enthält und weniger als 1 Gew. % Silizium enthält, wobei das Magnetblech (2) zwei Flächenseiten (10) aufweist, die beide eine Nitridschicht (12) mit Einlagerungen von Eisennitriden (14) umfassen, wobei die Nitridschichten (12) jeweils ein Dicke (16) aufweisen, die weniger als 15 % der Magnetblechdicke (18) beträgt.

## Beschreibung

Die Erfindung betrifft ein Magnetblech für ein Blechpaket einer elektrischen Maschine nach dem Oberbegriff des Patentanspruchs 1, einen Magnetblechstapel nach Patentanspruch 7, eine elektrische Maschine nach Patentanspruch 8 sowie ein Verfahren zur Herstellung eines Magnetblechs nach Patentanspruch 9.

Moderne elektrische Maschinen, insbesondere Elektromotoren, die für hohe Rotationsgeschwindigkeiten ausgelegt sind, benötigen mechanisch hochbelastbare Rotoren. Üblicherweise wird für die Zusammenstellung eines Rotors für einen Elektromotor eine Vielzahl von Magnetblechen zu einem Blechpaket bzw. zu einem Magnetblechstapel zusammengestapelt. Diese zusammengestapelten Magnetbleche bilden somit ein dreidimensionales Gebilde, das entsprechende Nuten und Vertiefungen aufweist, in denen elektrische Leiter als Spulen verlegt werden. Die hohen Rotationsgeschwindigkeiten des Rotors führen zu einer erheblichen mechanischen Belastung der einzelnen Magnetbleche und des Magnetblechstapels. Aus diesem Grund ist es zunehmend schwierig, durch herkömmliche Walzverfahren und Stanzverfahren aus Blechen die entsprechenden Magnetbleche mit den geforderten Festigkeiten herzustellen.

In der EP 3595148 A1 wird ein alternatives Verfahren zur Herstellung einer Materiallage in Form eines Magnetbleches beschrieben.

Die Aufgabe der Erfindung besteht darin, ein Magnetblech, einen Magnetblechstapel sowie eine elektrische Maschine und ein Verfahren zur Herstellung eines Magnetblechs bereitzustellen, das gegenüber dem Stand der Technik noch stärker gegenüber hohen Rotationsgeschwindigkeiten resistiv ist und dabei sehr gute magnetische Eigenschaften aufweist.

Die Lösung der Aufgabe besteht in einem Magnetblech nach Patentanspruch 1, in einem Magnetblechstapel nach Patentanspruch 7, in einer elektrischen Maschine gemäß Patentanspruch 8 sowie in einem Verfahren zur Herstellung eines Magnetbleches nach Patentanspruch 9.

Das erfindungsgemäße Magnetblech für einen Magnetblechstapel einer elektrischen Maschine umfasst ein Kernmaterial, das mindestens 97,5 Gew.-% (bevorzugt 98,5 Gew. %) Eisen und weniger als 1 Gew.-% (bevorzugt weniger als 0,5 Gew. %) Silizium enthält. Das Magnetblech weist zwei Flächenseiten auf, die beide eine Nitridschicht mit Einlagerung von Eisennitriden umfassen. Diese Nitridschichten weisen dabei jeweils eine Dicke auf, die weniger als 15 % der Magnetblechdicke insgesamt beträgt.

Das beschriebene Magnetblech für einen Magnetblechstapel unterscheidet sich von herkömmlichen, gewalzten Magnetblechen darin, dass das Kernmaterial im Wesentlichen aus reinem Eisen besteht, und dass es möglichst wenig Silizium enthält, das die ferromagnetischen Eigenschaften verschlechtert. Je mehr Eisen das Kernmaterial des Magnetblechs enthält, also je reiner das Eisen ist, umso höher ist die Sättigungsmagnetisierung des Magnetblechs. Da reines Eisen jedoch eine geringere Festigkeit als verschiedene Eisenlegierungen aufweist, wird dem Magnetblech eine Nitridschicht an seinen Flächenseiten zugeführt. Durch die beschriebene Nitridschicht wird grundsätzlich die Zugfestigkeit des Magnetbleches erhöht. Dies erfolgt dadurch, dass durch die in der Oberfläche eingebrachte Schicht eine Volumenvergrößerung in der Randzone entsteht, die zu Druckspannungen auf beiden Seiten des Magnetbleches führt. Diese induzierten Druckspannungen wiederum reduzieren die Wirkung von Oberflächenfehlern wie zum Beispiel Kerben, da sie vorhandene Zugspannungen kompensieren und somit die Anfälligkeit gegen die genannten Oberflächendefekte reduzieren. Daher ist es auch von Bedeutung, dass beide Flächenseiten des Magnetbleches mit der Nitridschicht versehen sind.

Die Beschichtung einer einzelnen Seite des Magnetbleches hätte negative Folgen, beispielsweise würde sich auch das Blech verziehen.

Unter dem Begriff Eisennitride werden insbesondere ε- und γ'-Eisennitride verstanden. Diese Modifikationen werden insbesondere durch die Verbindungen Fe₂N, Fe₃N und/oder Fe₄N gebildet. Je nach Herstellungsverfahren der Nitridschicht und insbesondere je nach Verwendung der unterschiedlichen Nitriermedien können Nitride auch sogenannte Carbonitride und/oder Oxonitride sein. In diesem Fall sind den Eisen-Stickstoff-Verbindungen noch Kohlenstoff- und/oder Sauerstoffatome eingelagert. Das heißt, bei der Bezeichnung Nitride werden auch darunter Oxonitride und Carbonitride verstanden. Unter dem Begriff Schicht kann grundsätzlich eine aufgetragene Schicht, bevorzugt jedoch eine intrinsische Schicht verstanden werden, die, ausgehend von der ursprünglichen Oberfläche des zu beschichtenden Magnetbleches, in dessen Volumen hineinragt und durch Einlagerung von Fremdatomen erzeugt wird.

Die Dicke der Nitridschicht beträgt in einer bevorzugten Ausgestaltungsform weniger als 30 µm, insbesondere weniger als 20 µm und besonders bevorzugt weniger als 15 µm. Damit beträgt die Dicke einer jeweiligen Nitridschicht bevorzugt weniger als 15 % der Dicke des Magnetbleches, die insbesondere weniger als 200 µm, ganz besonders bevorzugt weniger als 120 µm beträgt. Wird der prozentuale Anteil der Nitridschicht bezogen auf die Höhe des Magnetbleches zu hoch, so wird die magnetische Eigenschaft des Magnetbleches, insbesondere seine sehr gute ferromagnetische Eigenschaft und die hohe Sättigungsfeldstärke, zu stark negativ beeinflusst. Daher gibt es in dem beschriebenen Verhältnis ein Optimum einerseits in der mechanischen Wirkung der Nitridschicht auf die Zugfestigkeit des Magnetbleches und andererseits auf den Erhalt seiner guten magnetischen Eigenschaften.

In einer besonders bevorzugten Ausgestaltungsform der Erfindung ist das Magnetblech Teil eines Rotors einer elektrischen Maschine. Insbesondere Rotoren in Hochgeschwindigkeitsmotoren haben eine hohe Drehgeschwindigkeit und dabei eine sehr hohe Zugspannung, die auf die Magnetbleche wirkt.

Ebenso ist ein Magnetblechstapel bzw. gleichbedeutend ein Blechpaket einer elektrischen Maschine mit einem Magnetblech nach einem der vorhergehenden Ansprüche Teil der Erfindung. Dieser Magnetblechstapel ist wiederum Teil einer elektrischen Maschine, sodass auch die elektrische Maschine, insbesondere ein Elektromotor an sich Teil der Erfindung ist.

Ein weiterer Bestandteil der Erfindung ist ein Verfahren zur Herstellung eines Magnetblechs, das folgende Schritte umfasst:
- Drucken einer Grünkörperschicht aus einer Siebdruckpaste mittels eines Siebdruckverfahrens
- Entbindern der Grünkörperschicht
- Temperaturbehandlung der Grünkörperschicht zur Erzeugung eines Magnetblechs,
die Erfindung zeichnet sich dadurch aus,
dass ein Kernmaterial des Magnetblechs zu 97,5 % aus Eisen besteht und dass
- das Magnetblech an zwei Flächenseiten mit einer Eisennitrid umfassenden Nitridschicht versehen wird.

Das beschriebene Verfahren ist dazu geeignet, ein Magnetblech darzustellen, das bereits zu Patentanspruch 1 bezüglich seiner Vorteile beschrieben ist. Insbesondere ist das Siebdruckverfahren mit einem anschließenden Wärmebehandlungsprozess, der einem Sinterprozess entspricht, dazu geeignet, Magnetbleche mit einem sehr hohen Anteil an Eisen, das nahezu als Reineisen bezeichnet werden kann, darzustellen. Im Gegensatz zu herkömmlich gewalzten Magnetblechen nach dem Stand der Technik ist es auf diese Art und Weise möglich, eben diesen hohen Eisenanteil bei einem gleichzeitig geringen Siliziumanteil durch das beschriebene Verfahren darzustellen. Der hohe Eisenanteil führt insbesondere zu einer hohen Sättigungsmagnetisierung und insgesamt besonders guten magnetischen Eigenschaften. Herkömmlich gewalzte und gestanzte Magnetbleche benötige zur Umformbarkeit einen relativ hohen Siliziumanteil, der, wie erwähnt, die magnetischen Eigenschaften negativ beeinflusst. Die Nitridschicht stärkt wie bereits beschrieben die Zugfestigkeit des Magnetblechs.

In einer bevorzugten Ausgestaltungsform der Erfindung wird die Nitridschicht mittels eines Gasphasenabscheidungsverfahrens erzeugt. Hierzu eignet sich insbesondere das Aufbringen einer Nitridschicht aus einer Reaktion des Eisens mit einem Ammoniakgas unter hohen Temperaturen (beispielsweise 350° C bis 550° C).

Der Siliziumanteil des Magnetbleches im Kernmaterial beträgt wiederum bevorzugt weniger als 1 Gew.-%, besonders bevorzugt weniger als 0,5 Gew. %, was die ferromagnetischen Eigenschaften des Kernmaterials positiv beeinflusst.

Weitere Ausgestaltungsformen und weitere Merkmale der Erfindung werden anhand der folgenden Figuren näher erläutert. Dabei handelt es sich um exemplarische Ausgestaltungsformen, die keine Einschränkung des Schutzbereichs bedeuten.

Dabei zeigen:
- Figur 1: eine Explosionsdarstellung eines Elektromotors,
- Figur 2: einen Magnetblechstapel bzw. ein Blechpaket eines Rotors,
- Figur 3: eine Draufsicht auf ein Magnetblech mit einer Nitridschicht,
- Figur 4: einen Querschnitt durch das Magnetblech entlang der Linien IV in Figur 3,
- Figur 5: einen stark vergrößerten, schematisierten Aus-schnitt der Mikrostruktur des Magnetbleches in dem Schnitt, der in Figur 4 mit V gekennzeichnet ist,
- Figur 6: eine alternative Variante der Mikrostruktur durch das Magnetblech, das in Figur 4 mit VI bezeichnet ist,
- Figur 7 - Figur 10: einen schematischen Ablauf des Herstel-lungsverfahrens des Magnetbleches.

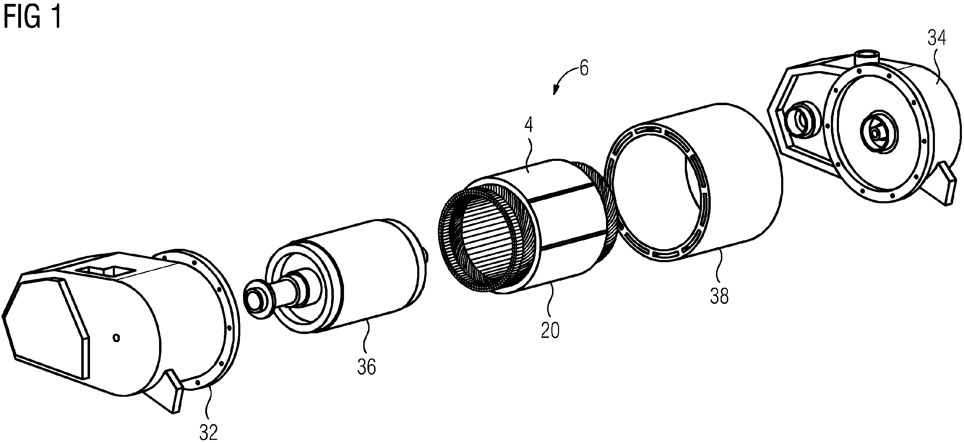

Figur 1 zeigt eine dreidimensionale Explosionsdarstellung einer herkömmlichen elektrischen Maschine 6, in diesem Fall in Form eines Elektromotors. Diese weist ein Gehäuse 32 auf, das durch ein Lagerschild 34 abgedeckt ist. In dem Gehäuse 32 befinden sich eine Welle 36 sowie ein Rotor 20, der auf der Welle 36 aufgebracht ist und in einem Stator 38 rotierend gelagert ist. Grundsätzlich kann die folgende beschriebene Technologie sowohl für einen Elektromotor als auch für einen hier nicht dargestellten Generator angewendet werden.

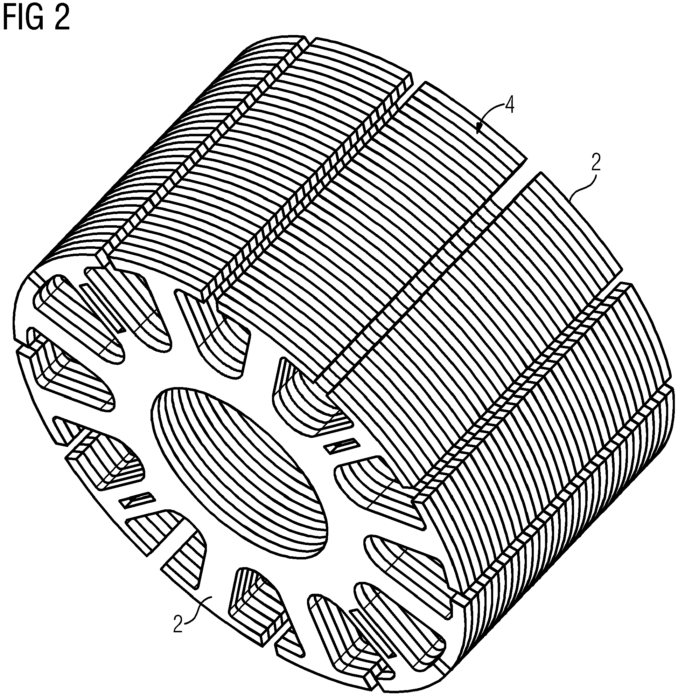

Der Rotor 20 umfasst dabei, wie in Figur 2 dargestellt ist, einen Magnetblechstapel 4, der auch als Blechpaket bezeichnet wird, und der eine Vielzahl von einzelnen Magnetblechen 2 in gestapelter Form umfasst. Die einzelnen Magnetbleche 2 bilden somit ein dreidimensionales, komplex geformtes Gebilde, durch das eine hier nicht dargestellte Mehrzahl an Wicklungen und elektrischer Leitungen gelegt ist.

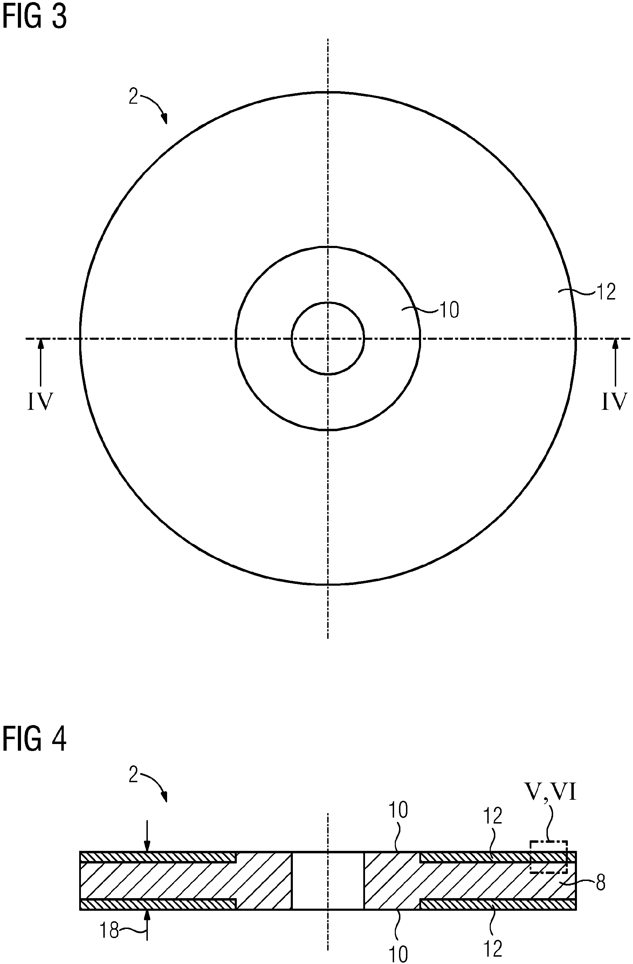

In Figur 3 ist sehr schematisch, ohne Darstellung von geometrischen strukturellen Besonderheiten, eine Draufsicht auf ein Magnetblech 2 gegeben, das an Flächenseiten 10 eine Nitrid-schicht 12 aufweist. Betrachtet man den Querschnitt IV des in Figur 3 gezeigten Magnetblech 2, der in Figur 4 dargestellt ist, so ist zu erkennen, dass jede Flächenseite 10 des Magnetbleches 2 zumindest teilweise mit einer Nitridschicht 12 versehen ist, die Eisennitride 14 in unterschiedlicher Ausgestaltung aufweist, auf die noch im Weiteren eingegangen wird.. Bei einer Magnetblechdicke 18 von ca. 100 µm weist die Dicke der Nitridschicht 12 bevorzugt weniger als 15 µm auf. Es ist wichtig, dass jede Flächenseite 10 eine Nitridschicht 12 aufweist, um einen Verzug des Magnetbleches 2 zu verhindern. Somit sind von den 100 µm Blechdicke (übliche Magnetblechdicken 18 bewegen sich zwischen 50 und 120 µm, Blechdicken 18 bis zu 200 µm sind technisch gut darstellbar) in etwa 30 % durch die Nitridschicht 12 belegt. Dieser prozentuale Anteil sollte nicht höher liegen, da sonst die magnetischen Eigenschaften des Magnetbleches in seinem Kernmaterial beeinträchtigt werden würden. Sehr dünne Nitridschichten hingegen weisen in der Regel nicht die gewünschten festigkeitserhöhenden Eigenschaften aus. Es ist daher anzustreben, dass jede Nitridschicht 12 möglichst mindestens 3 % der Magnetblechdicke 18 beträgt.

Die guten magnetischen Eigenschaften des Magnetbleches 2 bestehen insbesondere darin, dass das Kernmaterial 8 des Magnetbleches 2 aus möglichst reinem Eisen, bevorzugt mehr als 97,5 % Eisen, besteht. Dies liegt daran, dass Reineisen die höchste Sättigungsmagnetisierung aller Werkstoffe auf Eisenbasis besitzt. Darin besteht auch der Vorteil gegenüber herkömmlich gewalzten Blechen, die zur mechanischen Umformbarkeit einen relativ hohen Silizium-Anteil aufweisen. Dies ist bei dem beschriebenen Magnetblech 2, auf dessen Herstellungsverfahren noch eingegangen werden wird, nicht nötig, weshalb der Silizium-Anteil weniger als 1 % beträgt. Das Silizium als Legierungsbestandteil des Eisens verschlechtert dessen ferromagnetische Eigenschaften und dessen Sättigungsmagnetisierung. Daher ist es vorteilhaft, möglichst wenig Silizium einzusetzen.

Da das Magnetblech 8 als Reineisenwerkstoff jedoch gegenüber speziellen hochfesten Legierungen eine niedrigere Zugfestigkeit aufweist, ist das Magnetblech 2 mit den beschriebenen Nitridschichten 12 versehen. Durch das Nitridieren werden in den Randzonen des Magnetbleches, also in den Nitridschichten 12, Druckspannungen erzeugt, welche die negative Wirkung von Zugspannungen kompensieren, die bei der Rotationsbewegung des Magnetblechstapels 4 auftreten. Bei Zugspannungen werden mikroskopische Oberflächendefekte, wie beispielsweise Einkerbungen oder mikroskopische Risse, vergrößert, sodass es bei einer kritischen Zugspannung zu einem katastrophalen Bruch des Gefüges kommen kann. Durch die kompensierende Wirkung der Druckspannungen, die an der Oberfläche durch die Nitrid-schicht 12 induziert werden, wird diese negative Wirkung der auftretenden Zugspannungen kompensiert.

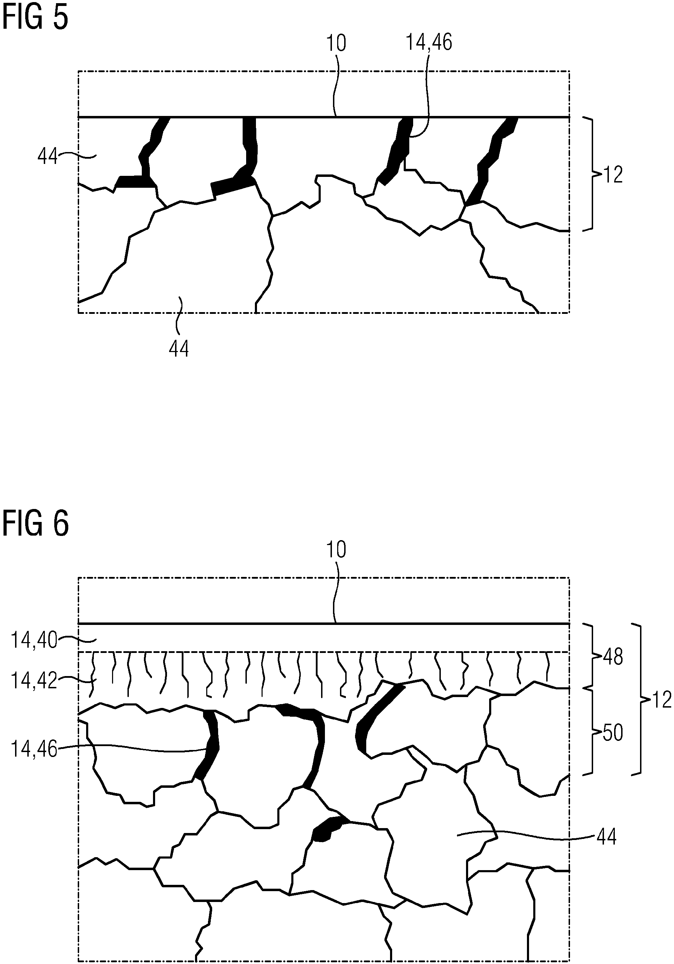

In den Figuren 5 und 6 sind Querschnitte entlang des Ausschnittes V und VI in Figur 4 gezeigt. Hier sind schematisch zwei mögliche Gefügestrukturen in dem angegebenen Bereich dargestellt. Je nach Konzentration des in das Eisengefüge eingebrachten Stickstoffs verändert sich das Gefüge des Eisens an der Oberfläche 10. In Figur 5 ist zunächst, ausgehend von der Oberfläche 10 (entsprechend der Flächenseite 10), eine Ferritstruktur gezeigt, bei der ferritische Körner 44 dominieren. Ferrit ist dabei eine ferromagnetische Struktur des Eisens, die bei dem Kernmaterial 8 des Magnetbleches 2 dominiert. Im Randbereich in Figur 5 ist zu erkennen, dass sich Eisennitridpartikel 46 zwischen die Ferritkörner einlagern. Bereits bei dieser Einlagerung von Eisennitridpartikeln 46 wird von der Entstehung einer Nitridschicht 12 gesprochen. Alle nitridische Phasen 40, 42, 46 sind in allgemeiner Form mit dem Bezugszeichen 14 versehen. Eisennitride entstehen beispielsweise in der Reaktion zwischen Eisen und Ammoniak bei Temperaturen zwischen 350 und 550° C, worauf noch eingegangen wird. Dabei sind zwei verschiedene Phasen des Eisennitrids dominant. Zum einen die orthorhombischen γ'-Modifikation, zum anderen die hexagonale ε-Modifikation. Dabei weist die ε-Modifikation in der Regel einen geringeren Stickstoffanteil auf, und die chemische Zusammensetzung Fe₃N dominiert gegenüber der Zusammensetzung Fe₂N bei der γ'-Modifikation. In Figur 5 ist ein Schnitt durch ein Gefüge der Nitrid-schicht 12 gezeigt, bei dem die Konzentration des Stickstoffes mit 0,2 Gew.-% bis 2 Gew.-% noch relativ gering ist. Bei einem höheren Anteil von Stickstoff beispielsweise bis zu 6 Gew.-% bildet sich zunehmend eine Stickstoff-Nitrid-Schicht unterhalb der Oberfläche 10 aus, die auch als Verbindungsschicht 48 bezeichnet wird.

Üblicherweise liegen beide genannten vornehmlichen Modifikationen, ε und γ', parallel vor. Bei der Verwendung von sehr reinem Eisen, wie dies beim Kernmaterial 8 des vorliegenden Magnetbleches 2 der Fall ist, dominiert jedoch die ε-Nitrid-schicht, die in Figur 6 mit dem Bezugszeichen 40 versehen ist, gegenüber der darunter liegenden γ'-Nitridschicht 42. In Figur 6 ist der Stickstoffanteil an der Oberfläche wie beschrieben bereits bei ca. 6 Gew.-%, sodass sich die feste Verbindungsschicht 48 ausbildet. Darunter liegt eine Diffusionsschicht 50, in der ähnlich wie in Figur 5 zwischen den einzelnen Ferritphasen 44 Eisennitridpartikel 46 eingelagert sind. Hier bildet die Diffusionsschicht 50 gemeinsam mit der Verbindungsschicht 48 die Nitridschicht 12. Figur 5 und Figur 6 zeigen, dass die Nitridschicht 12 je nach Konzentration des eingebrachten Stickstoffs (ggf. auch in Verbindung mit Sauerstoff und Kohlenstoff, d.h. mit Bildung von Oxonitriden und Karbonitriden) unterschiedliche Formen annehmen kann. Diese reichen von einzelnen Einlagerungen von Eisennitridpartikeln 46, wie dies in Figur 5 dargestellt ist, bis hin zur vollständigen Ausbildung einer Verbindungsschicht 48, die ausschließlich aus Eisennitrid in verschiedenen Modifikationen, ε und γ', besteht.

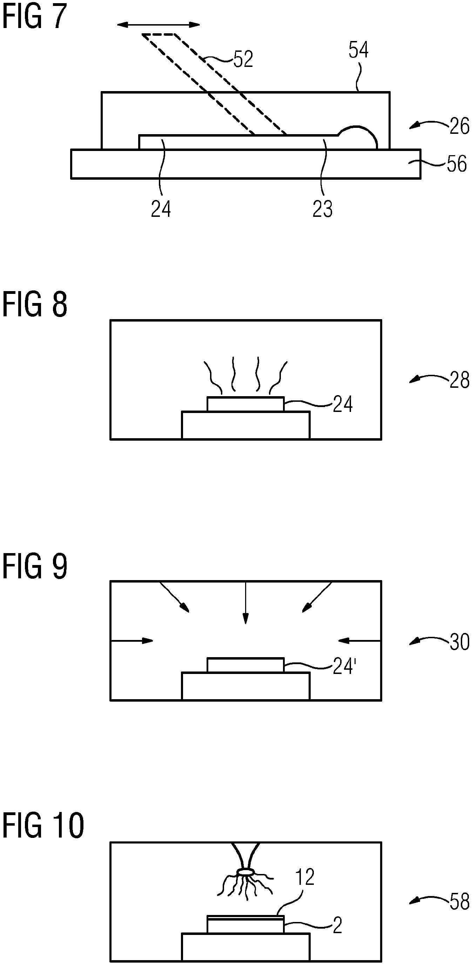

In den Figuren 7 bis 10 wird der Herstellungsprozess für das Magnetblech 2, wie es bereits beschrieben ist, skizziert. Hierbei handelt es sich um stark schematisierte Darstellungen der einzelnen Prozessschritte. Zunächst wird gemäß Figur 7 in einem Siebdruckverfahren 26 mittels eines Siebes 54 eine Siebdruckpaste 23 auf ein Substrat 56 mittels eines Rakels 52 aufgedruckt. Somit erhält man nach einer anschließenden Trocknung eine Grünkörperschicht 24. Die Grünkörperschicht 24 wird im Weiteren gemäß Figur 8 in einem Entbinderungsprozess 28 von flüchtigen organischen Stoffen, die als Bindemittel in der Siebdruckpaste 23 vorhanden sind, befreit. Die so entbinderte Grünkörperschicht 24' wird in einem Temperaturbehandlungsschritt 30, der als Sinterprozess ausgestaltet ist, zum Magnetblech 2 gesintert. Unter dem Begriff Sintern versteht man das diffusionsgesteuerte stoffschlüssige Verbinden zwischen einzelnen Körnern des Grünkörpers 24'. Dabei kann es vereinzelt zu Aufschmelzprozessen kommen, was je nach Phasenbestandteil und Temperatur grundsätzlich möglich, aber nicht vorherrschend ist. Je nach Temperaturprozess wird durch die Sinterung ein fester, porenarmer Körper erschaffen, der das Magnetblech 2 abbildet. Ein Volumenschwund von 10 % bis 20 % während des Sinterprozesses (Sinterschwund) ist eine dabei übliche Größenordnung. Das so entstandene Magnetblech 2 wird nun einem weiteren Nitridierungsprozess 58 unterzogen, in dem durch einen Gasphasenprozess in einer Temperatur zwischen 350 und 550°C Ammoniak auf die Oberfläche 10 des Magnetbleches 2 aufgetragen wird, wobei die beschriebenen Eisennitridphasen gemäß den Figuren 5 und 6 entstehen. Bei dem beschriebenen Gasphasennitridieren handelt es sich um eine vorteilhafte Ausgestaltungsform, wobei es jedoch verschiedene Nitridierungsmöglichkeiten gibt, zum Beispiel das Tauchnitridieren in einem stickstoffhaltigen Bad oder das Nitridieren durch Ionenimplantation. Die Gasphasennitridierung ist jedoch technisch mit dem geringsten Aufwand und den ergiebigsten Schichtwachstum zu gestalten.

### Bezugszeichenliste

- 2: Magnetblech
- 4: Magnetblechstapel
- 6: elektrische Maschine
- 8: Kernmaterial
- 10: Flächenseiten
- 12: Nitridschicht
- 14: Eisennitriden
- 16: Dicke Nitridschicht
- 18: Magnetblechdicke
- 20: Rotor
- 23: Siebdruckpaste
- 24: Grünkörperschicht
- 26: Siebdruckverfahren
- 28: Entbindern
- 30: Temperaturbehandlung
- 32: Gehäuse
- 34: Lagerschild
- 36: Welle
- 38: Stator
- 40: ε-Eisennitridphase
- 42: γ'-Eisennitridphase
- 44: Ferritphase
- 46: Eisennitridpartikel
- 48: Verbindungsschicht
- 50: Diffusionsschicht
- 52: Rakel
- 54: Sieb
- 56: Substrat
- 58: Nitridieren

## Patentansprüche

1. Magnetblech für ein Magnetblechstapel einer elektrischen Maschine (6), wobei das Magnetblech (2) ein Kernmaterial (8) umfasst, das mindestens 97,5 Gew. % Eisen enthält und weniger als 1 Gew. % Silizium enthält, wobei das Magnetblech (2) zwei Flächenseiten (10) aufweist, die beide eine Nitridschicht (12) mit Einlagerungen von Eisennitriden (14) umfassen, wobei die Nitridschichten (12) jeweils eine Dicke (16) aufweisen, die weniger als 15 % der Magnetblechdicke (18) beträgt.

2. Magnetblech nach Anspruch 1, **dadurch gekennzeichnet, dass** die Nitridschichten (12) eine Dicke von weniger als 30 µm, bevorzugt weniger als 20pm, besonders bevorzugt weniger als 15 µm aufweisen.

3. Magnetblech nach Anspruch 1 oder 2, **dadurch gekennzeichnet, dass** die Magnetblechdicke weniger als 200 µm, bevorzugt von weniger als 120 µm beträgt.

4. Magnetblech nach einem der vorhergehenden Ansprüche, **dadurch gekennzeichnet, dass** es sich bei den Eisennitriden (14) um ε- und γ'-Eisennitride handelt.

5. Magnetblech nach einem der vorhergehenden Ansprüche, **dadurch gekennzeichnet, dass** die Nitridschichten (12) die Verbindungen Fe₂N, Fe₃N und/oder Fe₄N enthalten.

6. Magnetblech nach Anspruch 1, **dadurch gekennzeichnet, dass** es ein Magnetblech (2) eines Rotors (20) einer elektrischen Maschine (6) ist.

7. Magnetblechstapel einer elektrischen Maschine (6) mit einem Magnetblech (2) nach einem der Ansprüche 1 bis 6.

8. Elektrische Maschine mit einem Magnetblechstapel (4) nach Anspruch 7.

9. Verfahren zur Herstellung eines Magnetblechs (2), umfassend folgende Schritte:
- Drucken einer Grünkörperschicht (24) einer Siebdruckpaste (23) mittels eines Siebdruckverfahrens (26),
- Entbindern (28) der Grünkörperschicht (24)
- Temperaturbehandlung (30) der Grünkörperschicht (24) zur Erzeugung eines Magnetbleches (2)
**dadurch gekennzeichnet, dass**
- ein Kernmaterial (8) des Magnetblechs (2) zu 97,5 Gew. % aus Eisen besteht und dass
- das Magnetblech (2) an zwei Flächenseiten (10) mit einer Eisennitrid (14) umfassenden Nitridschicht (12) versehen wird.

10. Verfahren nach Anspruch 9, **dadurch gekennzeichnet, dass** die Nitridschicht (12) mittels eines Gasphasenverfahrens erzeugt wird.

11. Verfahren nach Anspruch 10, **dadurch gekennzeichnet, dass** die Nitridschicht (12) mittels einer Reaktion der Flächenseiten (10) des Magnetblechs (2) mit Ammoniakgas erzeugt wird.

12. Verfahren nach einem der Ansprüche 9 bis 11, **dadurch gekennzeichnet, dass** das Kernmaterial (8) des Magnetblechs (2) weniger als 1 Gew. % Silizium enthält.

13. Verfahren nach einem der vorhergehenden Ansprüche, **dadurch gekennzeichnet, dass** das Kernmaterial des Magnetblechs einen Siliziumanteil von weniger als 0,5 % Gew. aufweist.

14. Verfahren nach einem der vorhergehenden Ansprüche, **dadurch gekennzeichnet, dass** das Kernmaterial des Magnetblechs einen Eisenanteil von mehr als 98,5 Gew. % aufweist.
